# EUROPÄISCHE PATENTSCHRIFT

(11) **EP 2 439 013 B1**
(45) Veröffentlichungstag und Bekanntmachung des Hinweises auf die Patenterteilung: **18.09.2013**
(21) Anmeldenummer: 11182893.5
(22) Anmeldetag: 27.09.2011
(51) Int. Cl.: B23K 26/06, B29C 65/16

(54) **Vorrichtung zur simultanen Umfangsbearbeitung eines Werkstückes mit Laserstrahlen**
Device for simultaneous perimeter processing of a workpiece with laser beams
Dispositif de traitement simultané d'une pièce usinée à l'aide de rayons laser

(30) Priorität: 08.10.2010 DE 102010047917
(43) Veröffentlichungstag der Anmeldung: 11.04.2012
(73) Patentinhaber: JENOPTIK Automatisierungstechnik GmbH, 07745 Jena (DE)
(72) Erfinder: Wollmann, Werner, 07747 Jena (DE); Langebach, Jan, Dr., 07551 Gera (DE); Zintl, Andreas, 99869 Wandersleben (DE); Griebel, Martin, 07743 Jena (DE)
(74) Vertreter: Schaller, Renate

(56) Entgegenhaltungen:
- DE-A1- 10 020 327
- US-A1- 2002 100 748
- US-B1- 6 476 345
- US-B2- 7 368 681

## Beschreibung

Die Erfindung betrifft eine Vorrichtung zur Umfangsbearbeitung eines Werkstückes mit Laserstrahlen, wie sie gattungsgemäß aus der US 7,368,681 B2 bekannt ist.

Für eine Umfangsbearbeitung mittels einer erfindungsgemäßen Vorrichtungen sind insbesondere Werkstücke, die eine prismatische oder zylindrische Umfangsfläche aufweisen, geeignet. Dabei soll unter einem Werkstück ein einzelnes Bauteil aber auch eine Baugruppe aus zwei ineinandergefügten Bauteile verstanden werden soll.

Die Umfangsbearbeitung kann z.B. das Verschweißen zweier Kunststoffbauteile, das Aufschrumpfen eines Folienschlauches auf eine Glasfaser oder das Härten einer Beschichtung auf einem Bauteil sein.

Gattungsgemäße Vorrichtungen findet man im Stand der Technik insbesondere in Verbindung mit Schweißverfahren. Dabei wird zwischen dem Konturschweißen und dem Simultanschweißen unterschieden.

Beim Konturschweißen werden ein oder mehrere Laserstrahlen und ein zu verschweißendes Werkstück relativ zueinander bewegt, sodass der oder die Laserstrahlen die Werkstückumfangsfläche entlang einer gewünschten Schweißnaht überstreichen.

Beim Simultanschweißen wird die gesamte Schweißnaht zeitgleich mit einem oder mehreren Laserstrahlen beaufschlagt.

In der US 7,368,681 B2 ist eine solche Vorrichtung offenbart. Sie umfasst eine Vielzahl von Laserstrahlquellen, die mit gleichen Abständen zueinander auf einer Kreislinie angeordnet sind und jeweils einen Laserstrahl radial zum Mittelpunkt der Kreislinie emittieren, wo sich die Laserstrahlen überlagern und ein Bearbeitungsgebiet konstanter Energiedichte bilden sollen. Den Laserquellen, die Diodenlaser (Laserdioden oder Laserdiodenbarren) sein können, können in Abstrahlrichtung jeweils einer Strahlformungsoptik vorgeordnet sein, mit der die Divergenz der Laserstrahlen beeinflusst wird.

Dabei kann über die Divergenz in der Ebene der Kreislinie, im Zusammenhang mit dem Radius der Kreislinie, die Größe des Bearbeitungsgebietes konstanter Energiedichte an die Größe des Werkstückes angepasst werden, welches zur Bearbeitung in dieses Bearbeitungsgebiet eingebracht wird. Die Strahlausdehnung senkrecht zur Ebene der Kreislinie ist bestimmend für die Schweißnahtbreite.

Da die Energieverteilung in einem Laserstrahl grundsätzlich eine Gaußverteilung entspricht, wird die Homogenität der Energieverteilung mit zunehmender Anzahl der sich zueinander versetzten, überlagernden Laserstrahlen verbessert.

Nachteilig ist, dass eine annähernd konstante Energiedichte in der Ebene der Kreislinie, welche für die Qualität der Schweißnaht über ihre Länge bestimmend ist, erst mit einer sehr großen Anzahl von Laserstrahlquellen erreicht wird.

Die Energieverteilung senkrecht zur Ebene, welche für die Qualität der Schweißnaht über ihre Breite bestimmend ist, bleibt unverändert eine Gaußverteilung.

Darüber hinaus erfordert eine derartige Vorrichtung zusätzliche Maßnahmen, die die Lasersicherheit gewährleisten, d. h. die sicherstellen, dass während des Arbeitens der Vorrichtung weder Menschen noch Maschinen der Gefahr ausgesetzt sind, durch Laserstrahlen Schaden zu nehmen.

Der Erfindung liegt die Aufgabe zugrunde, eine lasersichere Vorrichtung zu schaffen, mit der die Umfangsfläche eines Werkstückes, welches in die Vorrichtung eingebracht wird, in einem Bearbeitungsbereich mit Laserstrahlen einer homogenen Energieverteilung beaufschlagt wird.

Diese Aufgabe wird durch eine Vorrichtung zur simultanen Umfangsbearbeitung eines Werkstückes mit Laserstrahlen mit einer Vielzahl von Laser-Optik-Modulen, bestehend aus einem Diodenlaser und einer vorgeordneten Strahlformungsoptik, die mit gleichen Abständen zueinander auf einer Kreislinie angeordnet sind und jeweils einen Laserstrahl, in einer gemeinsamen Abstrahlebene liegend, radial zum Mittelpunkt der Kreislinie emittieren, sodass sich die Laserstrahlachsen der Laserstrahlen im Mittelpunkt schneiden, dadurch gelöst, dass im Inneren der Kreislinie ein speziell ausgebildeter Wellenleiter angeordnet ist.

Der Wellenleiter weist die Form eines geraden Zylinders auf und ist so angeordnet, dass dessen Zylinderachse senkrecht auf der Abstrahlebene stehend durch den Mittelpunkt der Kreislinie verläuft.

Um die Zylinderachse ist eine Ausnehmung zur Aufnahme eines zu bearbeitenden Werkstückes ausgebildet. Diese Ausnehmung kann so ausgebildet sein, dass sie in ihrer Form und Größe des aufzunehmenden Werkstückes angepasst ist, sodass das Werkstück unmittelbar in die Ausnehmung eingesetzt werden kann oder die Ausnehmung ist so groß ausgeführt, dass in ihr unterschiedliche Adapter einsetzbar sind, die mit unterschiedlich zylinderförmigen Innenflächen einen an verschiedene Werkstücke angepassten freien Innenbereich umschließen, sodass Werkstücke mit unterschiedlichen Umfangsflächen mittelbar über den Adapter in die Ausnehmung eingesetzt werden können.

Der Wellenleiter besteht aus einem Unterteil und einem Oberteil. Beide schließen miteinander einen die Abstrahlebene einschließenden Innenraum ein. Dieser Innenraum ist mittig durch die Ausnehmung geöffnet, sodass ein in die Ausnehmung eingeführtes Werkstück, wenigstens teilweise in dem Innenraum angeordnet werden kann. Das Unterteil des Wellenleiters bildet die Bodenfläche des Innenraumes und dessen Oberteil die Deckfläche. Diese beiden Flächen sind für die Laserstrahlen reflektierend. Am Umfang des Wellenleiters weist der Innenraum Strahleintrittsöffnungen in einer gleichen Anzahl, wie Laser-Optik-Module vorhanden sind, auf. Sie liegen jeweils einem Laser-Optik-Modul gegenüber und sind so groß, dass sie einen eintretenden Laserstrahl nicht begrenzen.

Ein durch ein Strahleintrittsfenster eintretender Laserstrahl wird zwischen der Bodenfläche und der Deckfläche mehrfach hin und her reflektiert, wodurch die Energieverteilung über den Strahlquerschnitt homogenisiert wird.

Innerhalb der Abstrahlebene hingegen bleibt der Laserstrahl unbeeinflusst.

Auf dem Werkstück wird folglich je Laser-Optik-Modul ein Strahlfleck mit einer homogenen Energieverteilung abgebildet, dessen Höhe in Richtung der Zylinderachse durch den Abstand zwischen der Bodenfläche und der Deckfläche und dessen Breite durch den Divergenzwinkel des Laserstrahles in der Abstrahlebene und dem Abstand des Laser-Optik-Moduls von der Werkstückoberfläche bestimmt ist.

Die Ausnehmung kann entweder nur das Oberteil durchdringen, womit ein eingesetztes Werkstück auf dem Unterteil aufliegt und ein Umfangsbereich des Werkstückes, welcher an einem Ende des Werkstückes angrenzt mit den Laserstrahlen beaufschlagt wird, z. B. um eine Schweißnaht zu bilden.

Die Ausnehmung kann sich auch teilweise in das Unterteil erstrecken, womit ein Umfangsbereich des Werkstückes mit Laserstrahlen beaufschlagt wird, beginnend in einem Abstand von einem Ende des Werkstückes gleich der Tiefe der Ausnehmung wie sie sich in das Unterteil erstreckt.

Die Ausnehmung kann auch das Unterteil vollständig durchdringen, sodass das Werkstück in Richtung der Zylinderachse durch die Vorrichtung geführt werden kann. Das kann erforderlich sein, wenn z. B. wenn ein Werkstück über seine gesamte Umfangsfläche mit Laserstrahlen beaufschlagt werden soll, um z. B. dessen Oberfläche auszuhärten oder das Werkstück ein Endlosstück wie eine Lichtleitfaser ist, auf die z. B. ein Kunststoffmantel aufgeschrumpft werden soll.

Vorteilhaft kann in den Adapter eine für die Laserstrahlen transparente Hülse eingesetzt sein, welche den freien Innenbereich begrenzt, womit die Verschmutzung des Innenraumes vermieden wird. Der Innenraum ist dann durch die Hülse zwar mechanisch verschlossen, jedoch optisch betrachtet, zum Durchtritt der Laserstrahlen offen.

Der Abstand zwischen der Bodenfläche und der Deckfläche kann entweder über den gesamten Innenraum konstant sein oder vorteilhaft vom Umfang des Wellenleiters her zur Ausnehmung hin geringer werden, womit die Qualität des Strahlfleckes aufgrund einer zunehmenden Anzahl von unterschiedlichen Reflexionen verbessert werden kann.

Je größer der zu bearbeitende Umfang eines zu bearbeitenden Werkstückes ist, desto größer ist vorteilhaft die Anzahl der Laser-Optik-Module. Vorteilhaft ist eine ungerade Anzahl, womit sich die Laser-Optik-Module nicht spiegelsymmetrisch gegenüberliegen können und ein direktes gegenseitiges Bestrahlen der Laser-Optik-Module und eine damit verbundene Zerstörung der Diodenlaser vermieden wird.

Um mit einer gleichen Anzahl gleicher Laser-Optik-Module, die jeweils einen Laserstrahl mit einer vorgegebenen Divergenz, insbesondere innerhalb der Abstrahlebene, emittieren, Werkstücke mit einem unterschiedlich großen Umfang bearbeiten zu können, müssen die damit erzeugten Strahlfleckbreiten in der Abstrahlebene, variierte werden können. Um das zu erreichen, müssen die Laser-Optik-Module in einem unterschiedlichen Abstand zur Zylinderachse und damit zum Werkstück in unterschiedlichen Abständen angeordnet werden. Zu diesem Zweck können zwischen den Laser-Optik-Modulen und den Strahldurchtrittsöffnungen Verlängerungsmodule angeordnet sein.

Sie sind so ausgebildet, dass sie jeweils den Innenraum in Richtung der Laserstrahlachsen verlängern. Vorteilhaft wird über die Anzahl von gleichen Verlängerungsmodulen ein gewünschter Abstand eingestellt und die Strahlfleckbreite auf die Werkstücksgröße optimiert eingestellt.

Die Grundfläche des Wellenleiters kann ein Kreis sein, ist jedoch vorteilhaft ein gleichseitiges Vieleck mit einer gleichen Seitenanzahl, wie Laser-Optik-Module um den Wellenleiter angeordnet sind. Unter einem Vieleck soll hier im weitesten Sinne auch eine Fläche mit gleichen Seitenlängen verstanden werden, bei der die Ecken, gebildet durch die aufeinander treffenden Seitenkanten, gerundet sind. Da die Ecken selbst keine Funktion haben, sondern nur die Seitenkanten an die Laser-Optik-Module bzw. die Verlängerungsmodule angesetzt sind, können diese eckig oder abgerundet ausgebildet sein.

Vorteilhaft sind der Wellenleiter, die Verlängerungsmodule und die Laser-Optik-Module, auf einer gemeinsamen Grundplatte montiert, die als Bezugsbasis für mögliche Fertigungs- und Montagetoleranzen der einzelnen Bauteile dient.

Um eine schnelle Anpassung der Vorrichtung zur Bearbeitung unterschiedlicher Werkstücke zu ermöglichen, ist es von Vorteil, wenn in der Grundplatte bereits eine Vielzahl von Gewindebohrungen vorgesehen sind, über die wahlweise eine unterschiedliche Anzahl von Verlängerungsmodulen montiert werden können.

Es ist auch vorteilhaft, wenn in dem Innenraum des Wellenleiter ein Infrarotsensor vorgesehen ist, um die Temperatur in der Ausnehmung messen zu können.

Die Temperaturmessung kann ausschließlich der Prozessüberwachung oder auch der Reglung von Prozessparametern, wie der Leistung oder der Einschaltdauer der Diodenlaser, dienen.

Anhand der Zeichnung wird die Vorrichtung im Folgenden beispielhaft näher erläutert.

Es zeigen:
Fig. 1 ein erstes Ausführungsbeispiel einer Vorrichtung
Fig. 2 ein Schnittbild durch eine Vorrichtung gemäß Fig.1
Fig. 3 eine variabel gestaltbare Vorrichtung gemäß einem dritten Ausführungsbeispiel

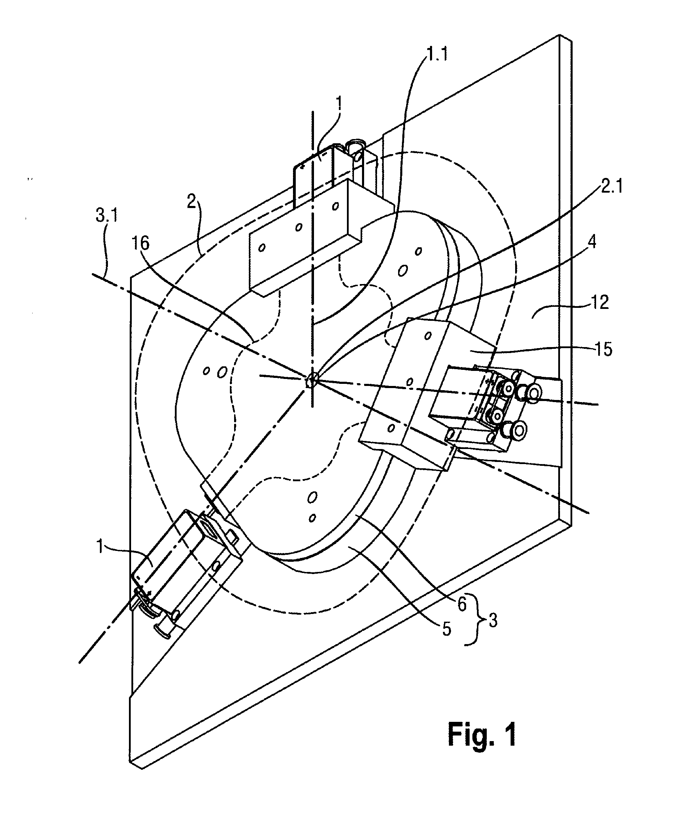

In Fig. 1 ist ein erstes Ausführungsbeispiel einer erfindungsgemäßen Vorrichtung dargestellt. Sie umfasst eine ebene, steife Grundplatte 12 auf der, auf einer Kreislinie 2 um einen Wellenleiter 3, mit einem gleichen Abstand zueinander und zum Mittelpunkt 2.1 der Kreislinie 2 hin ausgerichtet, drei Laser-Optik-Module 1 angeordnet sind, sodass die Laserstrahlachsen 1.1 der von den Laser-Optik-Modulen 1 ausgesandten Laserstrahlen, in einer gemeinsamen Abstrahlebene liegen und sich im Mittelpunkt 2.1 schneiden. Der Wellenleiter 3, dessen Mittelpunkt mit dem Mittelpunkt 2.1 der Kreislinie zusammenfällt, weist mittig eine Ausnehmung 4 auf, in die ein zu bearbeitendes Werkstück eingeführt werden kann, sodass dessen Umfangsfläche durch die Laserstrahlen beaufschlagt werden kann.

Zur Bearbeitung von Werkstücken mit einem zunehmend größerem Umfang können anstelle von drei Laser-Optik-Modulen 1 zunehmend mehr Laser-Optik-Module 1 in gleicher Weise angeordnet sein.

Die Laser-Optik-Module 1 bestehen jeweils aus einem üblichen Diodenlaser und einer Strahlformungsoptik.

Der Diodenlaser umfasst eine Laserdiode, oder bevorzugt einen Laserdiodenbarren, und eine Kollimationsoptik, welche einen in Richtung der sogenannten fast axis stark divergierenden, vom Diodenlaser emittierten Laserstrahl kollimiert und ihn in Richtung der hierzu senkrechten, sogenannten slow axis, in der er nur geringfügig divergiert, unbeeinflusst lässt. Die Diodenlaser sind innerhalb Laser-Optik-Module 1 so angeordnet, dass bei einem auf der Grundplatte 12 montierten Lasermodul der Laserstrahl so emittiert, dass dessen slow axis in der Ausbreitungsebene liegt.

Die Strahlformungsoptik, die vorteilhaft eine Plankonvex-Zylinderlinse ist, ist so ausgelegt, dass sie den Laserstrahl in Richtung der fast axis so stark aufweitet, dass er bereits kurz nach Eintritt in den Wellenleiter 3 auf die Bodenfläche 5.1 und die Deckfläche 6.1 auftrifft.

Für eine bestimmungsgemäße Funktion der Vorrichtung ist es wichtig, dass ein Laserstrahl, der auf ein in der Mitte der Vorrichtung positioniertes Werkstück gerichtet ist, in Richtung der slow axis unbeeinflusst bleibt und in Richtung der fast axis erst nach einer Vielzahl von Reflexionen auf die Werkstückoberfläche auftrifft.

Durch die Vielfachreflexionen in Richtung der fast axis wird die Energieverteilung in dem sich auf der Werkstückoberfläche abbildenden Strahlfleck homogenisiert, womit ein gleichmäßiger Wärmeeintrag über den Strahlfleck in das Werkstück bewirkt wird. Die Ausdehnung des Strahlfleckes in Richtung der fast axis wird nachfolgend als Strahlfleckhöhe und in Richtung der slow axis als Strahlfleckbreite bezeichnet. Durch die Aneinanderreihung mehrere Strahlflecken, was durch die Einwirkung der Anzahl von Diodenlasern erfolgt, wird zeitgleich über den gesamten Umfang des Werkstückes ein Umfangsbereich über eine Höhe gleich der Strahlfleckhöhe mit Laserstrahlen beaufschlagt. Die Strahlfleckhöhe wird durch die Dimensionierung der Vorrichtung, insbesondere die Raumhöhe des Innenraumes 7 innerhalb des Wellenleiters 3, der nachfolgend beschrieben wird, bestimmt.

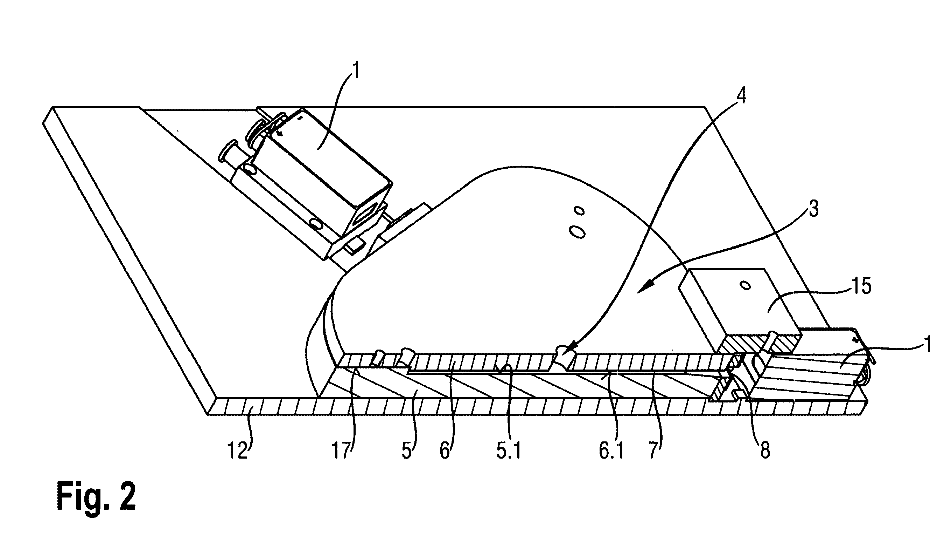

Der Wellenleiter 3 weist die Form eines geraden Zylinders auf, bestehend aus einem Unterteil 5 und einem Oberteil 6, zwischen denen ein Innenraum 7 ausgebildet ist, durch den hindurch die Laserstrahlen zum Werkstück gelangen. In Richtung der fast axis werden die Laserstrahlen zwischen der Deckfläche 6.1 des Innenraumes 7, welche durch das Oberteil 6 gebildet ist, und der Bodenfläche 5.1 des Innenraumes 7, welche durch das Unterteil 5 gebildet ist, hin und her reflektiert. Um hierbei möglichst geringe Energieverluste zu haben, sind die Bodenfläche 5.1 und die Deckfläche 6.1 sowie Seitenflächen 16, welche die Deckfläche 6.1 und die Bodenfläche 5.1 teilweise verbinden, hochverspiegelt. In Fig. 1 ist der Verlauf der Seitenflächen 16 durch Strichlinien beispielhaft dargestellt. Der Verlauf der Seitenflächen 16 ist so gewählt, dass sie die Laserstrahlen, zumindest auf dem direkten Weg zum Werkstück nicht beeinflussen, d. h. sie begrenzen die Laserstrahlen nicht. Gleichzeitig stellen sie sicher, dass die in den Wellenleiter 3 eingetretenen Laserstrahlen den Wellenleiter 3 nicht wieder verlassen. Teile von Laserstrahlen, die am Werkstück vorbei auf die Seitenflächen 16 auftreffen, werden zurück zum Werkstück oder zu einer anderen Seitenfläche 16 reflektiert. Die Seitenflächen 16 enden jeweils an Strahleintrittsöffnungen 8 an der Umfangsfläche des Wellenleiters 3. Eine Strahleintrittsöffnung 8 ist in der Schnittzeichnung in Fig. 2 zu sehen.

Die Grundfläche des Wellenleiters 3 ist bei einer Vorrichtung gemäß dem ersten Ausführungsbeispiel, wie es in den Fig. 1 und 2 dargestellt ist, ein Dreieck mit stark abgerundeten Ecken, die miteinander Planflächen einschließen denen gegenüber jeweils ein Laser-Optik-Modul 1 angeordnet ist. Gemäß Fig. 1 sind die Laser-Optik-Module 1 mit dem Wellenleiter 3 jeweils über eine Abdeckkappe 15 verbunden, was hier für zwei der Laser-Optik-Module 1 dargestellt ist. Am dritten Laser-Optik-Modul 1 wurde auf die Darstellung der Abdeckkappe 15 verzichtet, um zu zeigen, dass zwischen der Umfangsfläche des Wellenleiters 3, an dem eine Strahleintrittsöffnung 8 vorgesehen ist und einem Strahlaustrittsfenster des Laser-Optik-Modules 1 eine Lücke sein kann.

Wie bereits erläutert, soll ein Laserstrahl in Richtung der slow axis unbeeinflusst bleiben. Um in Abhängigkeit von der Größe des Umfangs des Werkstückes und der Anzahl der Laser-Optik-Module 1 Strahlflecken mit einer Strahlfleckbreite zu bilden, deren Aneinanderreihung zu einer umfänglich vollständigen Beaufschlagung mit Laserstrahlen führt, müssen diese bei einer vorgegebenen Divergenz in Richtung der slow axis mit einem bestimmten Abstand zum Werkstückumfang angeordnet sein. Ein möglicher Mindestabstand ist durch die Dimensionierung des Wellenleiters 3 gegeben, an dessen Umfangsflächen die Laser-Optik-Module 1 unmittelbar angesetzt sein können.

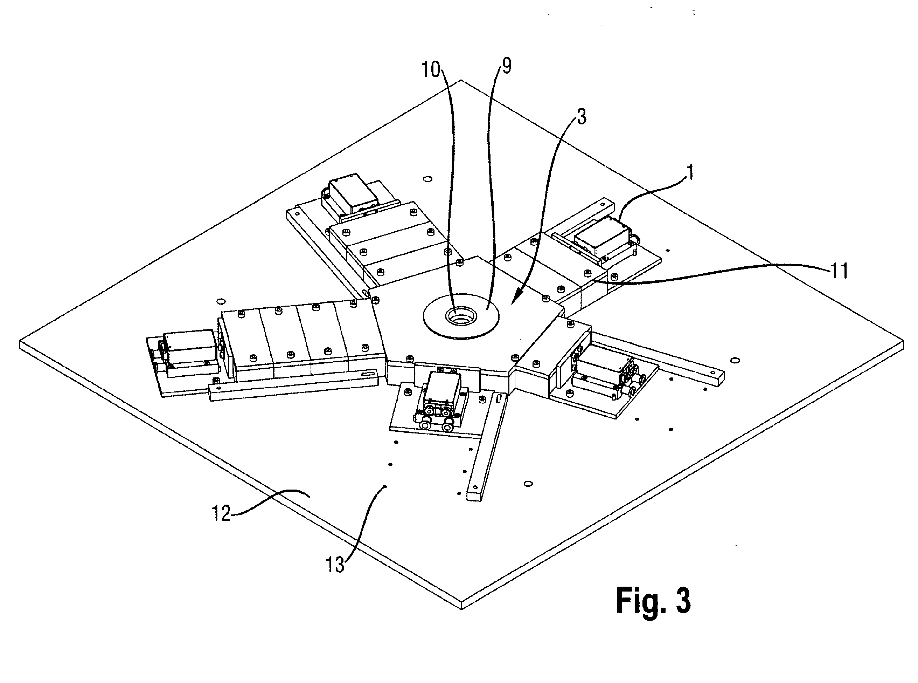

Wie in Fig. 1 gezeigt, kann der Abstand vergrößert werden, in dem die Laser-Optik-Module 1 mit einer Lücke zum Wellenleiter 3 positioniert werden. Eine solche Lücke zwischen einem Austrittsfenster eines Laser-Optik-Moduls 1 und einem Strahleintrittsfenster des Wellenleiters 3 wird dann entweder, wie in Fig. 1 gezeigt, durch eine Abdeckkappe 15 abgedeckt oder wie in Fig. 3 gezeigt, welches ein zweites Ausführungsbeispiel darstellt, durch eine Anzahl von Verlängerungsmodulen 11 verbunden.

Die Abdeckkappe 15 und die Verlängerungsmodule 11 können so dimensioniert sein, dass sie der gleichen Funktion gerecht werden, wie der Wellenleiter 3, d. h. in Richtung der slow axis ist der von ihr umschlossene Raum so groß, dass der Laserstrahl nicht auf eine Seitenfläche 16 trifft.

In Richtung der fast axis hingegen ist die Höhe des umschlossenen Raumes gleich der Höhe des Innenraumes 7 des Wellenleiters 3, sodass bereits hier durch Mehrfachreflexionen eine Homogenisierung eingeleitet wird.

In Fig. 2 ist ein Schnittbild durch eine Vorrichtung gemäß dem ersten Ausführungsbeispiel gezeigt. Es ist zu erkennen, dass eine Ausnehmung 4 um die Zylinderachse 3.1 des Wellenleiters 3 nur durch das Oberteil 6 hindurch geht. Ein Werkstück, welches in die Ausnehmung 4 eingesetzt wird, steht damit auf dem Unterteil 5 auf und der Bereich der Umfangsfläche, welcher bearbeitet wird, grenzt an ein Ende des Werkstückes. Um den Innenraum 7 wenigstens gegenüberliegend von den Strahleintrittsöffnungen 8 sicher für die Laserstrahlen zu verschließen, sind die Kontaktflächen 17, über die das Unterteil 5 und das Obertteil 6 aneinander liegen, in einer zur Bodenfläche 5.1 und der Deckfläche 6.1 in gleicher Richtung versetzten Ebene vorgesehen.

Die Ausnehmung 4 ist im ersten Ausführungsbeispiel ein Kreiszylinder und damit für ein Werkstück geeignet, welches ebenfalls, zumindest in dem Bereich, über welches es mit den Laserstrahlen bearbeitet werden soll, zylinderförmig ausgebildet ist, um es in die Ausnehmung 4 einzuführen zu können. Vorteilhaft ist ein nur geringes Spiel zwischen dem Werkstück und der Ausnehmung 4, womit der Bereich über den Umfang des Werkzeuges der bearbeitet wird scharf begrenzt wird. Insbesondere wenn die Bearbeitung ein Schweißen ist, entsteht damit eine sauber begrenzte Schweißnaht.

Ein zweites Ausführungsbeispiel, dargestellt in Fig.3, unterscheidet sich zum ersten insbesondere durch die Grundfläche des Wellenleiters 3, die ein gleichseitiges Fünfeck darstellt, optimiert an die Anzahl von fünf Laser-Optik-Modulen 1.

Vorteilhaft ist hier in die Ausnehmung 4, die hier nicht zur unmittelbaren Aufnahme des Werkstückes ausgelegt ist, ein Adapter 9 eingesetzt. Das hat den Vorteil, dass durch die Verwendung eines jeweils geeigneten Adapters 9 in Abhängigkeit von der Umfangsgröße und Umfangsform des Werkstückes, die Vorrichtung an verschiedene Werkstücke angepasst werden kann.

Die Vorrichtung ist ideal zur Bearbeitung von Werkstücken, die eine kreiszylinderförmige Umfangsflächen haben, aber ebenso geeignet für prismatische Umfangsflächen.

Vorteilhaft kann der freie Bereich im Adapter 9 durch eine Hülse 10 begrenzt sein, die für die Laserstrahlen transparent ist. Damit kann die Verschmutzung des Innenraumes 7 des Wellenleiters 3 durch entstehende Abfallprodukte vermieden werden.

Nur zur Demonstration der Variationsvielfalt einer erfindungsgemäßen Vorrichtung wurden in Fig. 3 den Laser-Optik-Modulen 1 eine unterschiedliche Anzahl von Verlängerungsmodulen 11 vorgeordnet. Grundsätzlich ist die Vorrichtung so ausgeführt , dass allen Laser-Optik-Modulen 1 eine gleiche Anzahl, die auch Null sein kann, gleicher Verlängerungsmodule 11 vorgeordnet ist, um gleiche Strahlflecken zu erzeugen.

Um eine Vorrichtung mit einem möglichst geringen Justageaufwand an ein anderes Werkstück anpassen zu können, ist in der Grundplatte 12 ein Muster von Gewindebohrungen 13 vorgesehen, über welches eine unterschiedliche Anzahl von Verlängerungsmodulen 11 und die Laser-Optik-Module 1 an unterschiedlich vorgegebenen Positionen montiert werden können. Zur schnellen Positionierung der Verlängerungsmodule 11 können Anschlagleisten auf der Grundplatte 12 befestigt sein, an die die Verlängerungsmodule 11 angelegt werden können.

### Bezugszeichenliste

- 1: Laser-Optik-Modul
- 1.1: Laserstrahlachse
- 2: Kreislinie
- 2.1: Mittelpunkt der Kreislinie
- 3: Wellenleiter
- 3.1: Zylinderachse
- 4: Ausnehmung
- 5: Unterteil
- 5.1: Bodenfläche
- 6: Oberteil
- 6.1: Deckfläche
- 7: Innenraum
- 8: Strahleintrittsöffnung
- 9: Adapter
- 10: Hülse
- 11: Verlängerungsmodul
- 12: Grundplatte
- 13: Gewindebohrungen
- 15: Abdeckkappe
- 16: Seitenfläche
- 17: Kontaktfläche

## Patentansprüche

1. Vorrichtung zur simultanen Umfangsbearbeitung eines Werkstückes mit Laserstrahlen mit einer Vielzahl von Laser-Optik-Modulen (1), bestehend aus einem Diodenlaser und einer vorgeordneten Strahlformungsoptik, die mit gleichen Abständen zueinander auf einer Kreislinie (2) angeordnet sind und jeweils einen Laserstrahl, in einer gemeinsamen Abstrahlebene liegend, radial zum Mittelpunkt (2.1) der Kreislinie (2) emittieren, sodass sich die Laserstrahlachsen (1.1) der Laserstrahlen im Mittelpunkt (2.1) schneiden, **dadurch gekennzeichnet, dass** im Inneren der Kreislinie (2) ein Wellenleiter (3) in Form eines geraden Zylinders so angeordnet ist, dass dessen Zylinderachse (3.1) senkrecht auf der Abstrahlebene stehend durch den Mittelpunkt (2.1) der Kreislinie (2) verläuft, dass um die Zylinderachse (3.1) eine Ausnehmung (4) zur Aufnahme eines zu bearbeitenden Werkstückes ausgebildet ist,
dass der Wellenleiter (3) aus einem Unterteil (5) und einem Oberteil (6) besteht, die miteinander einen die Abstrahlebene einschließenden, durch die Ausnehmung (4) geöffneten Innenraum (7) mit einer die Laserstrahlen reflektierenden Bodenfläche (5.1) und einer die Laserstrahlen reflektierenden Deckfläche (6.1) bilden, der zu den Laser-Optik-Modulen (1) hin am Umfang des Wellenleiters (3) jeweils eine Strahleintrittsöffnung (8) aufweist und die Laser-Optik-Module (1) so ausgelegt sind, dass der Laserstrahl zwischen der Bodenfläche (5.1) und der Deckfläche (6.1) mehrfach hin und her reflektiert wird, während er innerhalb der Abstrahlebene in seiner Ausbreitung unbeeinflusst auf ein aufgenommenes Werkstück auftrifft, womit auf dem Werkstück je Laser-Optik-Modul (1) ein Strahlfleck mit einer homogenen Energieverteilung abgebildet wird, dessen Höhe in Richtung der Zylinderachse (3.1), durch den Abstand der Bodenfläche (5.1) zur Deckfläche (6.1) und dessen Breite durch den Divergenzwinkel des Laserstrahles in der Abstrahlebene und dem Abstand des Laser-Optik-Moduls (1) von der Werkstückoberfläche bestimmt ist.

2. Vorrichtung nach Anspruch 1, **dadurch gekennzeichnet,**
**dass** in die Ausnehmung (4) ein Adapter (9) eingesetzt ist, mit einem freien Innenbereich der an den Umfang des Werkstückes angepasst ist, womit die Vorrichtung an verschiedene Werkstückgrößen und -formen angepasst werden kann.

3. Vorrichtung nach Anspruch 1, **dadurch gekennzeichnet,**
**dass** die Ausnehmung (4) das Oberteil (6) und das Unterteil (5) vollständig durchdringt, sodass das Werkstück in Richtung der Zylinderachse (3.1), durch die Vorrichtung geführt werden kann.

4. Vorrichtung nach Anspruch 2, **dadurch gekennzeichnet,**
**dass** der Adapter (9) eine für die Laserstrahlen transparente Hülse (10) umfasst, welche den freien Innenbereich begrenzt, womit die Verschmutzung des Innenraumes (7) vermieden wird.

5. Vorrichtung nach Anspruch 1, **dadurch gekennzeichnet,**
**dass** der Abstand der Bodenfläche (5.1) und der Deckfläche (6.1) über den Innenraum (7) vom Umfang des Wellenleiters (3) zur Ausnehmung (4) hin geringer wird, womit die Qualität des Strahlfleckes verbessert werden kann.

6. Vorrichtung nach Anspruch 1, **dadurch gekennzeichnet,**
**dass** eine ungerade Anzahl von Laser-Optik-Modulen (1) vorhanden ist, womit ein gegenseitiges Bestrahlen der Laser-Optik-Module (1) vermieden wird.

7. Vorrichtung nach Anspruch 1, **dadurch gekennzeichnet,**
**dass** zwischen den Laser-Optik-Modulen (1) und den Strahldurchtritts-öffnungen (8) Verlängerungsmodule (11) angeordnet sind, die so ausgebildet sind, dass sie jeweils den Innenraum (7) in Richtung der Laserstrahlachsen (1.1) verlängern, womit die Strahlfleckbreite auf die Werkstückgröße optimiert einstellbar ist.

8. Vorrichtung nach Anspruch 1, **dadurch gekennzeichnet,**
**dass** die Grundfläche des Wellenleiters ein Vieleck ist, mit einer gleichen Seitenanzahl wie Laser-Optik-Module (1) um den Wellenleiter (3) angeordnet sind.

9. Vorrichtung nach Anspruch 7, **dadurch gekennzeichnet,**
**dass** der Wellenleiter (3), die Verlängerungsmodule (11) und die Laser-Optik-Module (1) auf einer gemeinsamen Grundplatte (12) montiert sind,

10. Vorrichtung nach Anspruch 9, **dadurch gekennzeichnet,**
**dass** in der Grundplatte (12) eine Vielzahl von Gewindebohrungen (13) vorgesehen sind, zur wahlweisen Montage einer unterschiedlichen Anzahl von Verlängerungsmodulen (11) und damit eines unterschiedlichen Abstandes der Laser-Optik-Module (1) vom Wellenleiter (3).

11. Vorrichtung nach Anspruch 1, **dadurch gekennzeichnet,**
**dass** im Innenraum (7) ein Infrarotsensor vorgesehen ist, um die Temperatur in der Ausnehmung (4) zu messen.

## Claims

1. A device for the simultaneous circumferential machining of a workpiece with laser beams, said device comprising a plurality of laser optical modules (1) which consist of a diode laser and an upstream beam-shaping lens system that are equidistantly spaced apart on a circular line (2) and each emit a respective laser beam, located in a common radiation plane, radially to the centre point (2.1) of the circular line (2) so that the laser beam axes (1.1) of the laser beams intersect in the centre point (2.1), **characterised in that**
a waveguide (3) in the form of a straight cylinder is arranged inside the circular line (2) such that its cylinder axis (3.1) extends through the centre point (2.1) of the circular line (2) perpendicular to the radiation plane,
a recess (4) for receiving a workpiece to be machined is formed around the cylinder axis (3.1), the waveguide (3) consists of a lower part (5) and an upper part (6), which jointly form an interior space (7), enclosing the radiation plane and opened by the recess (4), with a bottom surface (5.1) reflecting the laser beams and a top surface (6.1) reflecting the laser beams, said interior space (7) further comprising one beam inlet opening (8) each towards the laser optical modules (1) at the circumference of the waveguide (3), and the laser optical modules (1) are provided such that the laser beam is reflected multiple times between the bottom surface (5.1) and the top surface (6.1), while impinging on a received workpiece with no influence on the propagation of the laser beam within the radiation plane, so that for each laser optical module (1) one beam spot with a homogeneous energy distribution is imaged on the workpiece, with the height of the beam spot in the direction of the cylinder axis (3.1) being determined by the distance from the bottom surface (5.1) to the top surface (6.1) and the width of the beam spot being determined by the angle of divergence of the laser beam in the radiation plane and the distance from the laser optical module (1) to the workpiece surface.

2. The device according to claim 1, **characterised in that** an adapter (9) is inserted in the recess (4), with a free interior area adapted to the circumference of the workpiece, to allow the device to be adapted to workpieces of different sizes and shapes.

3. The device according to claim 1, **characterised in that** the recess (4) penetrates the upper part (6) and the lower part (5) completely to allow the workpiece to be passed through the device in the direction of the cylinder axis (3.1).

4. The device according to claim 2, **characterised in that** the adapter (9) comprises a sleeve (10), which is transparent for the laser beams and limits the free interior area to prevent soiling of the interior space (7).

5. The device according to claim 1, **characterised in that** the distance of the bottom surface (5.1) and the top surface (6.1) decreases over the interior space (7) from the circumference of the waveguide (3) to the recess (4), allowing the quality of the beam spot to be improved.

6. The device according to claim 1, **characterised in that** an odd number of laser optical modules (1) is present to avoid mutual irradiation of the laser optical modules (1).

7. The device according to claim 1, **characterised in that** extension modules (11) are arranged between the laser optical modules (1) and the beam passage openings (8), said extension modules (11) being provided such that they respectively extend the interior space (7) in the direction of the laser beam axes (1.1) to allow optimised adjustment of the beam spot width to the size of the workpiece.

8. The device according to claim 1, **characterised in that** the base of the waveguide is a polygon with as many sides as there are laser optical modules (1) disposed around the waveguide (3).

9. The device according to claim 7, **characterised in that** the waveguide (3), the extension modules (11) and the laser optical modules (1) are mounted on a common base plate (12).

10. The device according to claim 9, **characterised in that** a plurality of threaded bores (13) are provided in the base plate (12) to selectively mount a varying number of extension modules (11) and thereby to vary the distance between the laser optical modules (1) and the waveguide (3).

11. The device according to claim 1, **characterised in that** an infrared sensor is provided in the interior space (7) to measure the temperature in the recess (4).

## Revendications

1. Dispositif pour l'usinage circonférentiel simultané par faisceaux laser d'une pièce à usiner, ledit dispositif comprenant plusieurs modules optiques à laser (1) qui sont chacun constitué d'un laser à diode et d'une optique de formation de faisceau disposée en amont, les lasers à diode et les optiques de formation de faisceau étant tous disposés avec le même écartement entre eux sur une ligne de cercle (2) et émettant un faisceau laser respectif, situé dans un plan de rayonnement commun, cette émission s'effectuant radialement vers le centre (2.1) de la ligne de cercle (2) de sorte que les axes (1.1) des faisceaux laser se croisent dans le centre (2.1), **caractérisé en ce que**
l'on dispose un guide d'onde (3) sous forme d'un cylindre droit à l'intérieur de la ligne de cercle (2) de sorte que l'axe (3.1) du cylindre traverse le centre (2.1) de la ligne de cercle (2) perpendiculairement au plan de rayonnement,
on réalise un évidement (4) autour de l'axe de cylindre (3.1) pour y loger la pièce à usiner,
le guide d'onde (3) est constitué d'une partie inférieure (5) et d'une partie supérieure (6), qui constituent ensemble un espace intérieur (7), enfermant le plan de rayonnement et ouvert par l'évidement (4), avec une face inférieure (5.1) réfléchissant les faisceaux laser et une face supérieure (6.1) réfléchissant les faisceaux laser, ledit espace intérieur (7) comprenant en outre une ouverture d'entrée de faisceau (8) respectif vers chaque module optique à laser (1) sur la circonférence du guide d'onde (3), et les modules optiques à laser (1) sont réalisés de manière à réfléchir plusieurs fois le faisceau laser entre la face inférieure (5.1) et la face supérieure (6.1), tandis que, dans le plan de rayonnement, le faisceau laser est incident sur une pièce à usiner sans aucun influence sur la propagation du faisceau laser, de manière à imager sur la pièce à usiner une tache focale à distribution d'énergie homogène pour chaque module optique à laser (1), la hauteur de ladite tache focale en direction de l'axe de cylindre (3.1) étant déterminée par l'écartement entre la face inférieure (5.1) et la face supérieure (6.1), et la largeur de ladite tache focale étant déterminée par l'angle de divergence du faisceau laser dans le plan de rayonnement et par l'écartement entre le module optique à laser (1) et la surface de la pièce à usiner.

2. Dispositif selon la revendication 1, **caractérisé en ce qu'**un adaptateur (9) est inséré dans l'évidement (4), avec une région intérieure libre adaptée à la circonférence de la pièce à usiner, ce qui permet d'adapter le dispositif à des pièces à usiner de tailles et formes différentes.

3. Dispositif selon la revendication 1, **caractérisé en ce que** l'évidement (4) traverse la partie supérieure (6) et la partie inférieure (5) complètement, ce qui permet de passer la pièce à usiner à travers le dispositif en direction de l'axe de cylindre (3.1).

4. Dispositif selon la revendication 2, **caractérisé en ce que** l'adaptateur (9) comprend une manche (10) qui est transparente pour les faisceaux laser et qui limite la région intérieure libre afin d'empêcher la pollution de l'espace intérieur (7).

5. Dispositif selon la revendication 1, **caractérisé en ce que** l'écartement entre la face inférieure (5.1) et la face supérieure (6.1) diminue à travers l'espace intérieur (7), à partir de la circonférence du guide d'onde (3) jusqu'à l'évidement (4), ce qui permet d'améliorer la qualité de la tache focale.

6. Dispositif selon la revendication 1, **caractérisé en ce qu'**il y a un nombre impaire de modules optiques à laser (1) afin d'éviter une irradiation mutuelle des modules optiques à laser (1).

7. Dispositif selon la revendication 1, **caractérisé en ce que** des modules de prolongement (11) sont disposés entre les modules optiques à laser (1) et les ouvertures de passage de faisceau (8), lesdits modules de prolongement (11) étant réalisés de manière à prolonger respectivement l'espace intérieur (7) en direction des axes de faisceau laser (1.1), ce qui permet une adaptation optimale de la largeur de la tache focale à la taille de la pièce à usiner.

8. Dispositif selon la revendication 1, **caractérisé en ce que** la base du guide d'onde est un polygone présentant autant de faces qu'il y a des modules optiques à laser (1) disposés autour du guide d'onde (3).

9. Dispositif selon la revendication 7, **caractérisé en ce que** le guide d'onde (3), les modules de prolongement (11) et les modules optiques à laser (1) sont montés sur un plateau de base commun (12).

10. Dispositif selon la revendication 9, **caractérisé en ce que** l'on réalise plusieurs taraudages (13) dans le plateau de base (12) pour le montage sélectif d'un nombre variable de modules de prolongement (11) et pour varier de cette façon l'écartement entre les modules optiques à laser (1) et le guide d'onde (3).

11. Dispositif selon la revendication 1 , **caractérisé en ce que** l'on prévoit un capteur infrarouge dans l'espace intérieur (7) afin de mesurer la température dans l'évidement (4).
